# EUROPEAN PATENT APPLICATION

(11) **EP 4 811 626 A1**
(43) Date of publication of application: **23.09.2026**
(21) Application number: 24883617.3
(22) Date of filing: 17.06.2024
(51) Int. Cl.: H02K 11/33, B62D 5/04

(54) **MOTOR CONTROL DEVICE AND ELECTRIC POWER STEERING DEVICE**

(30) Priority: 17.11.2023 JP 2023195656
(71) Applicant: NSK Steering & Control, Inc., Tokyo, 141-0032 (JP)
(72) Inventor: OHIRA Kazuhiro, Tokyo 141-0032 (JP); KAWADA Masaaki, Tokyo 141-0032 (JP)
(74) Representative: Rings, Rolf
(86) International application number: PCT/JP2024/021892
(87) International publication number: WO 2025/104952

(57) **Abstract**

A motor control device includes: a motor case (20a); a bracket (60) fastened to the motor case (20a), using first bracket fixing screws (67s and 68s); a cover (61) fixed to the bracket (60); and a circuit board (62) for motor control fastened to the bracket (60), using circuit board fixing screws (70s to 73s) and housed in a space enclosed by the bracket (60) and the cover (61). The cover (61) is formed in such a way as to be close to heads of the first bracket fixing screws (67s and 68s) and close to heads of the circuit board fixing screws (70s to 73s).

## Description

### Technical Field

The present invention relates to a motor control device and an electric power steering device.

### Background Art

PTL 1 described below describes a motor control device that includes a case including a case body and a cover that covers the case body and a circuit board for motor control that is housed in the case and fastened to the case body, using circuit board fixing screws.

### Citation List

### Patent Literature

PTL 1: JP 2022-130025 A

### Summary of Invention

### Technical Problem

A configuration in which an electronic circuit device that controls a motor is integrated with the motor has been known. Such a configuration is employed in, for example, an electric power steering device.

An object of the present invention is to, in a configuration in which a circuit board for motor control is fastened to a bracket with a screw and the bracket is fastened to the motor with a screw, prevent the screws from falling off.

### Solution to Problem

In order to achieve the above-described object, according to an aspect of the present invention, there is provided a motor control device including: a motor case configured to house a stator and a rotor of a motor; a bracket fastened to the motor case, using a first bracket fixing screw; a cover fixed to the bracket; and a circuit board for motor control fastened to the bracket, using a circuit board fixing screw and housed in a space enclosed by the bracket and the cover. The cover is formed in such a way that a part of the cover facing a head of the first bracket fixing screw is close to a head of the first bracket fixing screw in an axial direction of the first bracket fixing screw and a part of the cover facing a head of the circuit board fixing screw is close to a head of the circuit board fixing screw in an axial direction of the circuit board fixing screw.

According to another aspect of the present invention, there is provided an electric power steering device including: the motor control device described above; and a motor controlled by the motor control device, wherein the electric power steering device provides a steering system of a vehicle with steering assist force by the motor.

### Advantageous Effects of Invention

According to the present invention, it is possible to, in a configuration in which a circuit board for motor control is fastened to a bracket with a screw and the bracket is fastened to the motor with a screw, prevent the screws from falling off.

### Brief Description of Drawings

FIG. 1 is a configuration diagram illustrative of an outline of an example of an electric power steering device of an embodiment;
FIG. 2 is a configuration diagram illustrative of an outline of an example of an electronic control unit (ECU) of the embodiment;
FIG. 3 is a block diagram of an example of a functional configuration of a control calculation device;
FIG. 4 is a perspective view describing attachment of the ECU to a motor;
FIG. 5 is a plan view of a bracket;
FIG. 6 is a cross-sectional view of the motor and the ECU taken along the line A-A in FIG. 5;
FIG. 7 is a cross-sectional view of the motor and the ECU taken along the line B-B in FIG. 5;
FIG. 8 is a cross-sectional view of the motor and the ECU taken along the line C-C in FIG. 5;
FIG. 9 is a configuration diagram illustrative of an outline of a first variation of the electric power steering device;
FIG. 10 is a configuration diagram illustrative of an outline of a second variation of the electric power steering device; and
FIG. 11 is a configuration diagram illustrative of an outline of a third variation of the electric power steering device.

### Description of Embodiments

Embodiments of the present invention will be described in detail with reference to the drawings. Note that the embodiments of the present invention to be described below indicate devices and methods to embody the technical idea of the present invention by way of example, and the technical idea of the present invention does not limit the constitution, arrangements, and the like of the constituent components to those described below. The technical idea of the present invention can be subjected to a variety of alterations within the technical scope prescribed by the claims described in CLAIMS.

In addition, although in the following description, a case where the present invention is applied to a motor control device of an electric motor that generates steering assist force for an electric power steering will be described, the present invention is not limited to application to an electric power steering device and can be widely applied to various uses. For example, the present invention may be applied to a current control device that supplies driving current to an actuator that drives a joint of a robot.

### (Configuration)

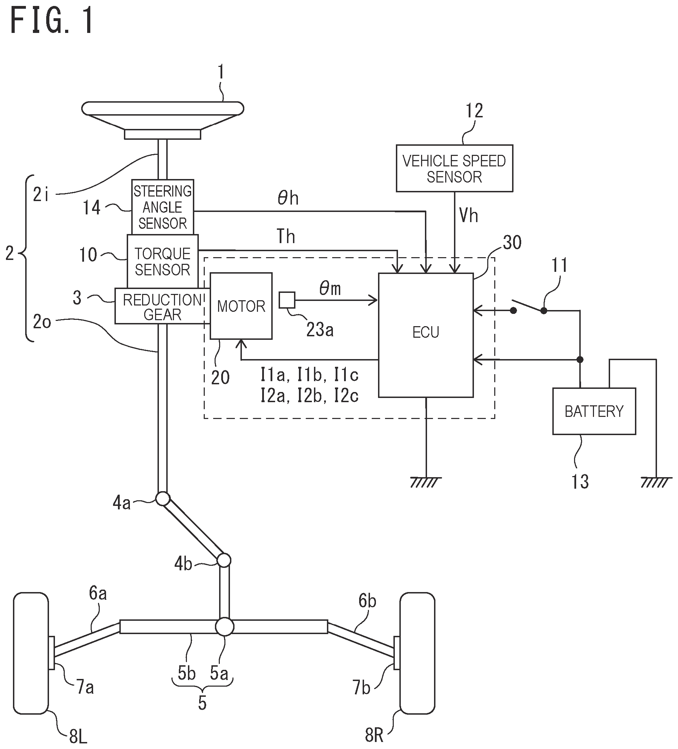

FIG. 1 is a configuration diagram illustrative of an outline of an example of an electric power steering (EPS) device of an embodiment. A steering shaft (steering wheel shaft) 2 of a steering wheel 1 is connected to steered wheels 8L and 8R by way of a reduction gear (worm gear) 3 that constitutes a speed reduction mechanism, universal joints 4a and 4b, a pinion rack mechanism 5, and tie rods 6a and 6b and further via hub units 7a and 7b.

The pinion rack mechanism 5 includes a pinion 5a that is coupled to a pinion shaft to which steering force is transmitted from the universal joint 4b and a rack 5b that meshes with the pinion 5a, and converts rotational motion transmitted to the pinion 5a to linear motion in the vehicle width direction by means of the rack 5b.

To the steering shaft 2, a torque sensor 10 configured to detect steering torque Th is disposed.

The steering shaft 2 includes an input-side shaft 2i and an output-side shaft 2o, and the input-side shaft 2i and the output-side shaft 2o are connected by a torsion bar (not illustrated) that is twisted due to a difference in rotation angles between the input-side shaft 2i and the output-side shaft 2o. A torque sensor 10 electromagnetically measures a torsion angle of the torsion bar as steering torque Th of the steering wheel 1. To the steering shaft 2, a steering angle sensor 14 configured to detect a steering angle θh of the steering wheel 1 is also disposed.

A motor 20 configured to assist steering force of the steering wheel 1 is also connected to the steering shaft 2 via the reduction gear 3. The motor 20 may be, for example, a polyphase motor. Although, in the following description, an example of a three-phase motor having double windings in which first system coils and second system coils are wound in the same motor housing and a common rotor is rotated by the two systems of coils will be described, the motor 20 may be a motor other than a double-winding motor and the number of phases of the motor 20 does not have to be three. A plurality of motors 20 configured to assist steering force of the steering wheel 1 may be connected to the same steering shaft 2.

To an electronic control unit (ECU) 30 configured to control the electric power steering device, power is supplied from a battery 13 and an ignition key signal is also input by way of an ignition switch 11.

The ECU 30 performs calculation of current command values serving as an assist control command, based on steering torque Th detected by the torque sensor 10, vehicle speed Vh detected by a vehicle speed sensor 12, and a steering angle θh detected by the steering angle sensor 14 and controls currents to be supplied to the motor 20 (A-phase current I1a, B-phase current I1b, and C-phase current I1c flowing through the first system coils and A-phase current I2a, B-phase current I2b, and C-phase current I2c flowing through the second system coils) by voltage control command values obtained by performing compensation and the like on the calculated current command values. The ECU 30 is an example of a "motor control device" described in the claims.

Note that the steering angle sensor 14 is not an essential component and the steering angle θh may be calculated by adding a torsion angle of the above-described torsion bar to a product of a motor rotation angle θm obtained from a rotation angle sensor 23a configured to detect a rotation angle of the rotation shaft of the motor 20 and a gear ratio of the reduction gear 3. As the rotation angle sensor 23a, for example, a resolver that detects a rotational position of a motor or a magnetic sensor that detects a magnetic field of a magnet attached to the rotation shaft of the motor 20 can be made use of. In addition, a turning angle of the steered wheels 8L and 8R may be used in place of the steering angle θh. The turning angle may be detected by, for example, detecting a displacement amount of the rack 5b.

The ECU 30 includes, for example, a computer including a processor and peripheral components, such as a storage device. The processor may be, for example, a central processing unit (CPU) or a micro-processing unit (MPU).

The storage device may include any one of a semiconductor storage device, a magnetic storage device, and an optical storage device. The storage device may include registers, a cache memory, or a memory, such as a read only memory (ROM) and a random access memory (RAM), that is used as a main storage device.

Functions of the ECU 30, which will be described below, are achieved by, for example, the processor of the ECU 30 executing computer programs stored in the storage device.

Note that the ECU 30 may be formed by use of dedicated hardware for executing each type of information processing that will be described below.

For example, the ECU 30 may include functional logic circuits that are implemented in a general-purpose semiconductor integrated circuit. For example, the ECU 30 may have a programmable logic device (PLD), such as a field-programmable gate array (FPGA).

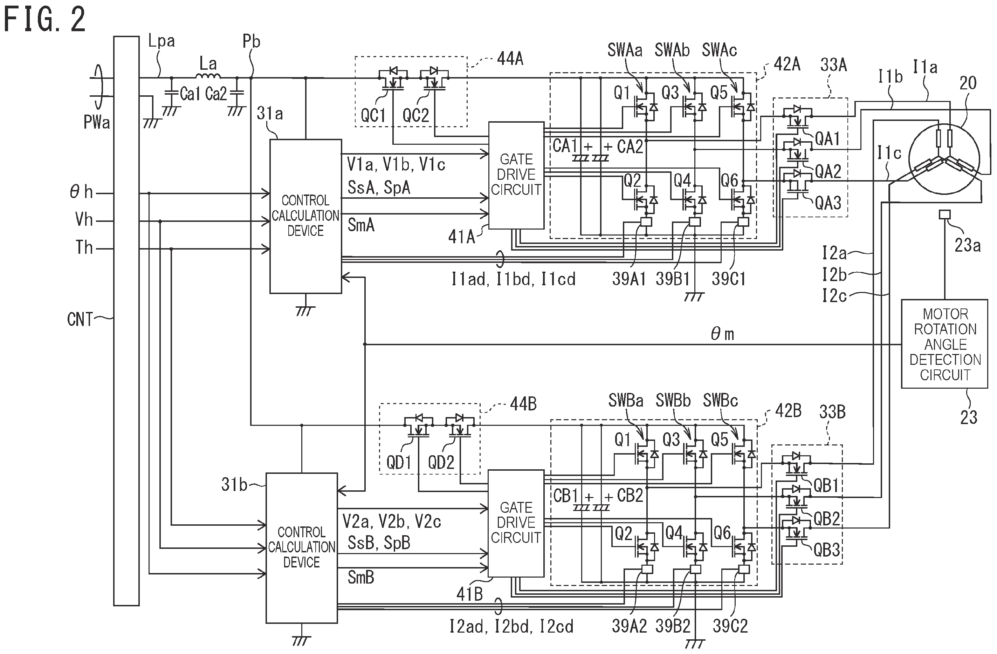

FIG. 2 is a configuration diagram illustrative of an outline of an example of the ECU 30 of the embodiment. The ECU 30 includes a motor rotation angle detection circuit 23, control calculation devices 31a and 31b, a first motor current cut-off circuit 33A and a second motor current cut-off circuit 33B, a first gate drive circuit 41A and a second gate drive circuit 41B, a first power conversion circuit 42A and a second power conversion circuit 42B, and a first power source cut-off circuit 44A and a second power source cut-off circuit 44B.

To the ECU 30, a power wiring PWa that transmits power from the battery 13 via a connector CNT is connected. A positive electrode-side power source line Lpa of the power wiring PWa passes through a noise filter circuit, such as an electromagnetic compatibility (EMC) filter, that is formed by a choke coil La and ceramic capacitors Ca1 and Ca2 and subsequently branches at a branch point Pb. One of branches of the positive electrode-side power source line Lpa after branching at the branch point Pb is connected to the control calculation device 31a and the first power source cut-off circuit 44A, and the other of the branches is connected to the control calculation device 31b and the second power source cut-off circuit 44B.

One end of the choke coil La is connected to the positive electrode-side power source line Lpa and one end of the ceramic capacitor Ca1, the other end of the choke coil La is connected to one end of the ceramic capacitor Ca2 and the branch point Pb, and the other ends of the ceramic capacitors Ca1 and Ca2 are grounded. On the other hand, a negative electrode-side line of the power wiring PWa is connected to a ground line of the ECU 30.

To the control calculation devices 31a and 31b, signals representing the steering torque Th detected by the torque sensor 10, the vehicle speed Vh detected by the vehicle speed sensor 12, and the steering angle θh detected by the steering angle sensor 14 are transmitted via the connector CNT.

The control calculation device 31a calculates current command values that are control target values of driving currents of the motor 20, based on at least the steering torque Th and outputs voltage control command values V1a, V1b, and V1c obtained by performing compensation and the like on the current command values to the first gate drive circuit 41A. The voltage control command values V1a, V1b, and V1c are an A-phase voltage control command value, a B-phase voltage command value, and a C-phase voltage command value of the first system coils, respectively.

The control calculation device 31b calculates current command values that are control target values of driving currents of the motor 20, based on at least the steering torque Th and outputs voltage control command values V2a, V2b, and V2c obtained by performing compensation and the like on the current command values to the second gate drive circuit 41B. The voltage control command values V2a, V2b, and V2c are an A-phase voltage control command value, a B-phase voltage command value, and a C-phase voltage command value of the second system coils, respectively.

Note that the control calculation device 31a and the control calculation device 31b may be integrated into a single control calculation device.

The first power source cut-off circuit 44A has a series circuit configuration in which two power source cut-off field effect transistors (FETs) QC1 and QC2 are connected in such a way that sources thereof are connected to each other and parasitic diodes thereof are thereby connected in the reverse direction, and connects the first power conversion circuit 42A to the positive electrode-side power source line Lpa or cuts off the first power conversion circuit 42A from the positive electrode-side power source line Lpa. A drain of the power source cut-off FET QC1 is connected to the positive electrode-side line LpA, and a drain of the power source cut-off FET QC2 is connected to a drain of each of high side FETs Q1, Q3, and Q5 in the first power conversion circuit 42A. The control calculation device 31a outputs control signals SsA and SpA for controlling conduction and cut-off of the power source cut-off FETs QC1 and Qc2, respectively, to the first gate drive circuit 41A. The first gate drive circuit 41A outputs gate signals for the power source cut-off FETs QC1 and QC2 in accordance with the control signals SsA and SpA and thereby controls turning on and off of the power source cut-off FETs QC1 and QC2.

In addition, the second power source cut-off circuit 44B has a series circuit configuration in which two power source cut-off FETs QD1 and QD2 are connected in such a way that sources thereof are connected to each other and parasitic diodes thereof are thereby connected in the reverse direction, and connects the second power conversion circuit 42B to the positive electrode-side power source line Lpa or cuts off the second power conversion circuit 42B from the positive electrode-side power source line Lpa. A drain of the power source cut-off FET QD1 is connected to the positive electrode-side line LpA, and a drain of the power source cut-off FET QD2 is connected to a drain of each of high side FETs Q1, Q3, and Q5 in the second power conversion circuit 42B. The control calculation device 31b outputs control signals SsB and SpB for controlling conduction and cut-off of the power source cut-off FETs QD1 and QD2, respectively, to the second gate drive circuit 41B. The second gate drive circuit 41B outputs gate signals for the power source cut-off FETs QD1 and QD2 in accordance with the control signals SsB and SpB and thereby controls turning on and off of the power source cut-off FETs QD1 and QD2.

When the voltage control command values V1a, V1b, and V1c are input from the control calculation device 31a, the first gate drive circuit 41A forms six gate signals that are generated by pulse width modulation (PWM) based on the voltage control command values V1a, V1b, and V1c and triangular-wave carrier signals. The first gate drive circuit 41A outputs the gate signals to the first power conversion circuit 42A.

When the voltage control command values V2a, V2b, and V2c are input from the control calculation device 31b, the second gate drive circuit 41B forms six gate signals that are generated by pulse width modulation based on the voltage control command values V2a, V2b, and V2c and triangular-wave carrier signals. The second gate drive circuit 41B outputs the gate signals to the second power conversion circuit 42B.

The first power conversion circuit 42A includes an inverter including three switching arms SWAa, SWAb, and SWAc each of which is formed by FETs serving as switching elements and electrolytic capacitors CA1 and CA2.

The switching arms SWAa, SWAb, and SWAc are connected in parallel with one another. The switching arm SWAa of the A-phase includes the high side FET Q1 and a low side FET Q2 that are connected in series, the switching arm SWAb of the B-phase includes the high side FET Q3 and a low side FET Q4 that are connected in series, and the switching arm SWAc of the C-phase includes the high side FET Q5 and a low side FET Q6 that are connected in series.

Each of the gate signals output from the first gate drive circuit 41A is input to a gate of one of the FETs Q1 to Q6, and the gate signals cause the A-phase current I1a, the B-phase current I1b, and the C-phase current I1c to be flowed from connection points between the FETs in the switching arms SWAa, SWAb, and SWAc to an A-phase winding, a B-phase winding, and a C-phase winding of the first system coils of the motor 20 via the first motor current cut-off circuit 33A, respectively.

The electrolytic capacitors CA1 and CA2 have a noise removal function and a power supply assist function for the first power conversion circuit 42A. The electrolytic capacitors CA1 and CA2 may be, for example, hybrid capacitors in which an electrolyte obtained by blending a conductive polymer and an electrolytic solution is employed.

The second power conversion circuit 42B includes an inverter including three switching arms SWBa, SWBb, and SWBc each of which is formed by FETs serving as switching elements and electrolytic capacitors CB1 and CB2.

The switching arms SWBa, SWBb, and SWBc are connected in parallel with one another. The switching arm SWBa of the A-phase includes the high side FET Q1 and a low side FET Q2 that are connected in series, the switching arm SWBb of the B-phase includes the high side FET Q3 and a low side FET Q4 that are connected in series, and the switching arm SWBc of the C-phase includes the high side FET Q5 and a low side FET Q6 that are connected in series.

Each of the gate signals output from the second gate drive circuit 41B is input to a gate of one of the FETs Q1 to Q6, and the gate signals cause the A-phase current I2a, the B-phase current I2b, and the C-phase current I2c to be flowed from connection points between the FETs in the switching arms SWBa, SWBb, and SWBc to an A-phase winding, a B-phase winding, and a C-phase winding of the second system coils of the motor 20 via the second motor current cut-off circuit 33B, respectively.

The electrolytic capacitors CB1 and CB2 have a noise removal function and a power supply assist function for the second power conversion circuit 42B. The electrolytic capacitors CB1 and CB2 may be, for example, hybrid capacitors.

Note that the first power conversion circuit 42A and the second power conversion circuit 42B may be power conversion circuits that supply three-phase currents to two different motors each of which generates steering assist force assisting steering of the steering wheel 1. For example, the two different motors may be connected to the same steering shaft 2 via a reduction gear.

On the source sides of the low side FETs Q2, Q4, and Q6 that form lower-side arms of the switching arms SWAa, SWAb, and SWAc in the first power conversion circuit 42A, current detection circuits 39A1, 39B1, and 39C1 are disposed, respectively. The current detection circuits 39A1, 39B1, and 39C1 include shunt resistors through which downstream-side currents of the switching arms SWAa, SWAb, and SWAc flow, respectively. The current detection circuits 39A1, 39B1, and 39C1 detect the A-phase current, the B-phase current, and the C-phase current in the first system coils, based on voltage drops across the shunt resistors and output detected values I1ad, I1bd, and I1cd obtained in the detection, respectively.

On the source sides of the low side FETs Q2, Q4, and Q6 that form lower-side arms of the switching arms SWBa, SWBb, and SWBc in the second power conversion circuit 42B, current detection circuits 39A2, 39B2, and 39C2 are disposed, respectively. The current detection circuits 39A2, 39B2, and 39C2 include shunt resistors through which downstream-side currents of the switching arms SWBa, SWBb, and SWBc flow, respectively. The current detection circuits 39A2, 39B2, and 39C2 detect the A-phase current, the B-phase current, and the C-phase current in the second system coils, based on voltage drops across the shunt resistors and output detected values I2ad, I2bd, and I2cd obtained in the detection, respectively.

The first motor current cut-off circuit 33A includes three phase cut-off FETs QA1, QA2, and QA3 to cut off the phase currents of the motor. A source of the phase cut-off FET QA1 is connected to the connection point between the FETs Q1 and Q2 of the switching arm SWAa in the first power conversion circuit 42A, and a drain of the phase cut-off FET QA1 is connected to the A-phase winding of the first system coils in the motor 20. A source of the phase cut-off FET QA2 is connected to the connection point between the FETs Q3 and Q4 of the switching arm SWAb, and a drain of the phase cut-off FET QA2 is connected to the B-phase winding of the first system coils in the motor 20. A source of the phase cut-off FET QA3 is connected to the connection point between the FETs Q5 and Q6 of the switching arm SWAc, and a drain of the phase cut-off FET QA3 is connected to the C-phase winding of the first system coils in the motor 20.

The control calculation device 31a outputs a control signal SmA to control conduction and cut-off of the first motor current cut-off circuit 33A to the first gate drive circuit 41A. The first gate drive circuit 41A outputs gate signals for the phase cut-off FETs QA1 to QA3 in accordance with the control signal SmA and thereby flows or cuts off the A-phase current I1a, the B-phase current I1b, and the C-phase current I1c from the first power conversion circuit 42A to the motor 20, respectively.

The second motor current cut-off circuit 33B includes three phase cut-off FETs QB1, QB2, and QB3 to cut off the phase currents of the motor. A source of the phase cut-off FET QB1 is connected to the connection point between the FETs Q1 and Q2 of the switching arm SWBa in the second power conversion circuit 42B, and a drain of the phase cut-off FET QB1 is connected to the A-phase winding of the second system coils in the motor 20. A source of the phase cut-off FET QB2 is connected to the connection point between the FETs Q3 and Q4 of the switching arm SWBb, and a drain of the phase cut-off FET QB2 is connected to the B-phase winding of the second system coils in the motor 20. A source of the phase cut-off FET QB3 is connected to the connection point between the FETs Q5 and Q6 of the switching arm SWBc, and a drain of the phase cut-off FET QB3 is connected to the C-phase winding of the second system coils in the motor 20.

The control calculation device 31b outputs a control signal SmB for controlling conduction and cut-off of the second motor current cut-off circuit 33B to the second gate drive circuit 41B. The second gate drive circuit 41B outputs gate signals for the phase cut-off FETs QB1 to QB3 in accordance with the control signal SmB and thereby flows or cuts off the A-phase current I2a, the B-phase current I2b, and the C-phase current I2c from the second power conversion circuit 42B to the motor 20, respectively.

The motor rotation angle detection circuit 23 acquires a detected value from the rotation angle sensor 23a and detects the motor rotation angle θm that is a rotation angle of the rotation shaft of the motor 20. The motor rotation angle detection circuit 23 outputs the motor rotation angle θm to the control calculation devices 31a and 31b.

The control calculation device 31a acquires, via a not-illustrated A/D conversion unit, the detected values I1ad, I1bd, and I1cd of the A-phase current, the B-phase current, and the C-phase current of the first system coils. The control calculation device 31b acquires, via a not-illustrated A/D conversion unit, the detected values I2ad, I2bd, and I2cd of the A-phase current, the B-phase current, and the C-phase current of the second system coils.

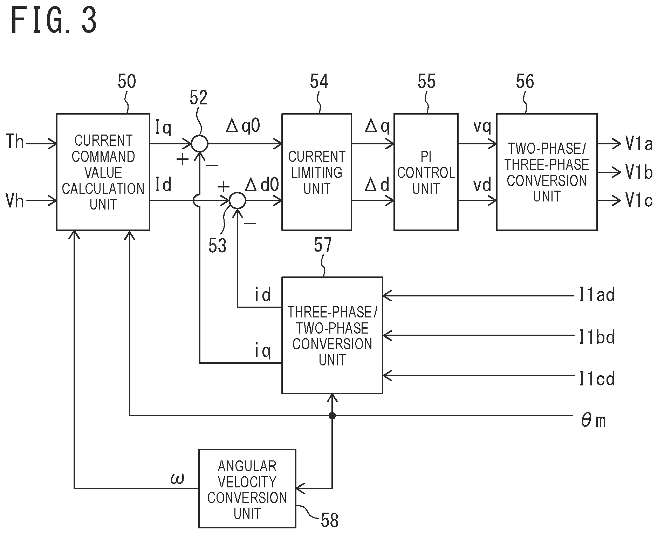

FIG. 3 is a block diagram of an example of a functional configuration of the control calculation device 31a. Note that although, in FIG. 3, only a functional configuration to drive the first system coils of the motor 20 is described, a functional configuration to drive the second system coils also has the same configuration.

The control calculation device 31a includes a current command value calculation unit 50, subtracters 52 and 53, a current limiting unit 54, a proportional-integral (PI) control unit 55, a two-phase/three-phase conversion unit 56, a three-phase/two-phase conversion unit 57, and an angular velocity conversion unit 58 and drives the motor 20 by vector control.

The current command value calculation unit 50 calculates a q-axis current command value Iq and a d-axis current command value Id that are required to be flowed through the motor 20, based on the steering torque Th, the vehicle speed Vh, the motor rotation angle θm of the motor 20, and rotational angular velocity ω of the motor 20.

On the other hand, the detected values I1ad, I1bd, and I1cd of the A-phase current, the B-phase current, and the C-phase current flowing through the first system coils of the motor 20 that are detected by the current detection circuits 39A1, 39B1, and 39C1, respectively are converted to currents id and iq in two axes, namely the d-axis and the q-axis, by the three-phase/two-phase conversion unit 57.

The subtracters 52 and 53, by subtracting the fed-back currents iq and id from the q-axis current command value Iq and the d-axis current command value Id, calculates q-axis deviation current Δq0 and d-axis deviation current Δd0, respectively.

The current limiting unit 54 limits upper limits of the q-axis deviation current Δq0 and the d-axis deviation current Δd0. Limited q-axis deviation current Δq and limited d-axis deviation current Δd are input to the PI control unit 55.

The PI control unit 55 calculates voltage command values vq and vd that bring the q-axis deviation current Δq0 and the d-axis deviation current Δd0 to 0, respectively. The two-phase/three-phase conversion unit 56 converts the voltage command values vd and vq to the A-phase voltage control command value V1a, the B-phase voltage command value V1b, and the C-phase voltage command value V1c for the first system of the motor 20 and outputs the A-phase voltage control command value V1a, the B-phase voltage command value V1b, and the C-phase voltage command value V1c to the first gate drive circuit 41A.

The angular velocity conversion unit 58 calculates the rotational angular velocity ω of the motor 20, based on temporal change in the motor rotation angle θm. The motor rotation angle θm and the rotational angular velocity ω are input to the current command value calculation unit 50 and are used for the vector control.

FIG. 1 is now referred to. As illustrated by the dashed line, the ECU 30 of the embodiment forms an integrated structure with the motor 20, and the ECU 30 is fixed to the motor 20 using screws.

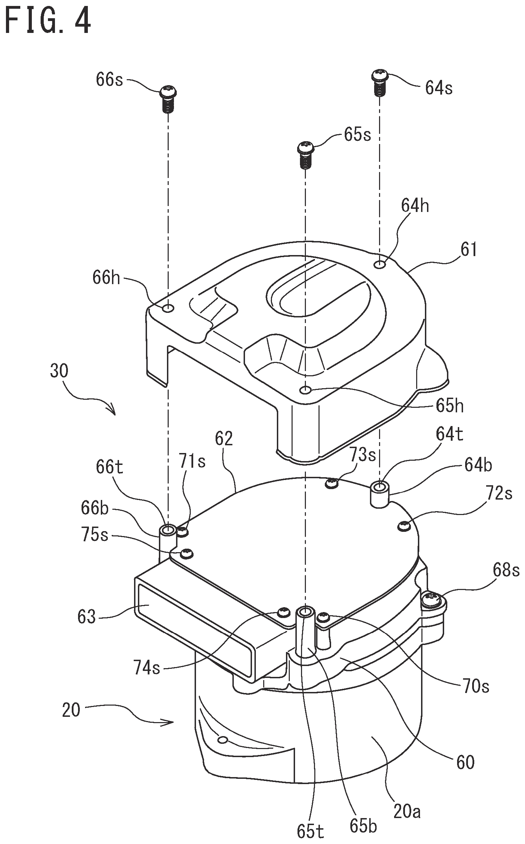

FIG. 4 is a perspective view describing attachment of the ECU 30 to the motor 20. The ECU 30 includes a bracket 60 that is fixed to a motor case 20a of the motor 20, a cover 61 that is fixed to the bracket 60, and a circuit board 62 on which the control circuit illustrated in FIG. 2 is installed.

The bracket 60 is fastened to the motor case 20a, using bracket fixing screws 67s, 68s, and 69s, which will be described later. The bracket fixing screws 67s and 68s are examples of a "first bracket fixing screw" described in the claims. The bracket fixing screw 69s is an example of a "second bracket fixing screw" described in the claims.

The cover 61 is fastened to the bracket 60, using cover fixing screws 64s, 65s, and 66s. Bosses 64b, 65b, and 66b are formed on the bracket 60, and threaded holes 64t, 65t, and 66t are formed in upper surfaces of the bosses 64b, 65b, and 66b, respectively.

In addition, attachment holes 64h, 65h, and 66h that penetrate the cover 61 are formed in the cover 61. The cover fixing screw 64s is screwed into the threaded hole 64t via the attachment hole 64h, the cover fixing screw 65s is screwed into the threaded hole 65t via the attachment hole 65h, and the cover fixing screw 66s is screwed into the threaded hole 66t via the attachment hole 66h. Through this operation, the cover 61 is fastened to the bracket 60, using the cover fixing screws 64s, 65s, and 66s.

The circuit board 62 is fastened to the bracket 60, using circuit board fixing screws 70s, 71s, 72s, and 73s and is housed in a space enclosed by the bracket 60 and the cover 61.

The circuit board 62 includes a connector 63 for connecting the circuit board 62 to a harness or a cable. The connector 63 is fastened to the circuit board 62, using connector fixing screws 74s and 75s.

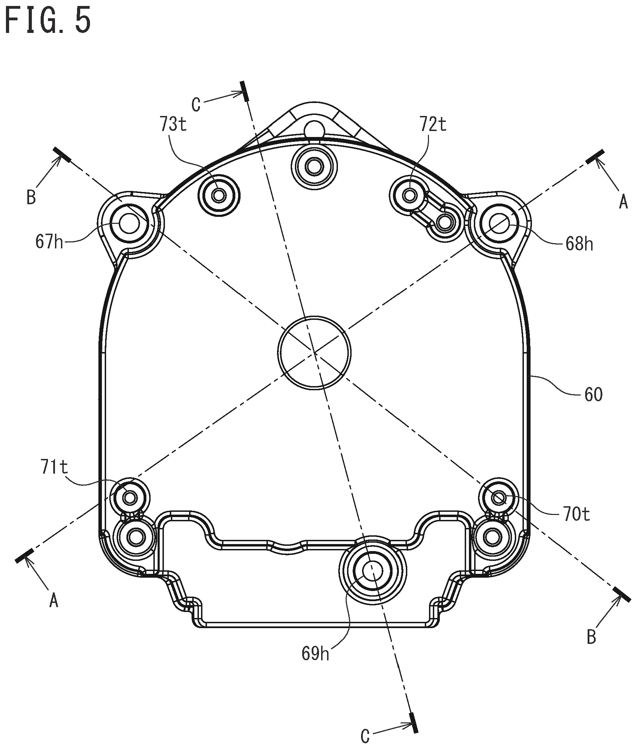

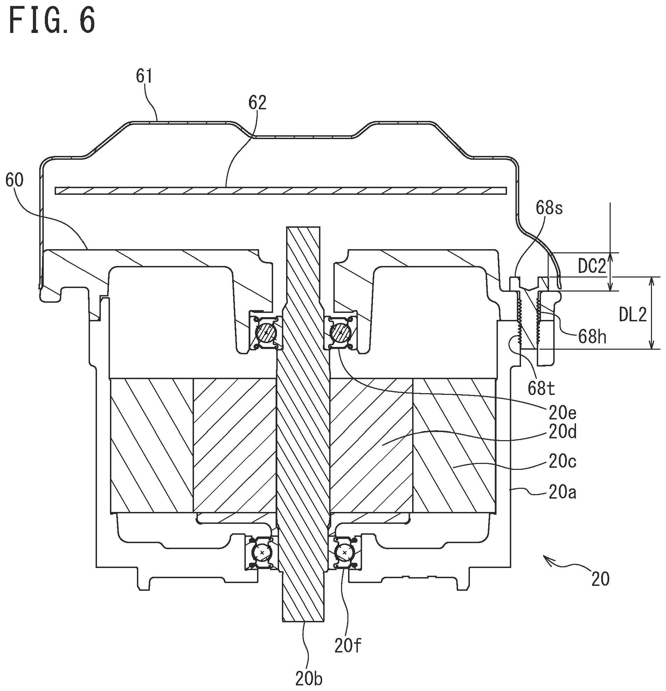

FIG. 5 is a plan view of the bracket 60, and FIGS. 6, 7, and 8 are cross-sectional views of the motor and the ECU taken along the line A-A, the line B-B, and the line C-C in FIG. 5, respectively. The cross-sectional views in FIGS. 6, 7, and 8 illustrate cross sections while the cover 61 and the circuit board 62 are fixed (attached) to the bracket 60 and the bracket 60 is fastened to the motor case 20a.

The motor 20 includes the motor case 20a, a motor rotation shaft 20b, a stator 20c fixed to the motor case 20a, a rotor 20d fixed to the motor rotation shaft 20b, and motor bearings 20e and 20f. The motor bearing 20e is held by the bracket 60 and the motor bearing 20f is held by the motor case 20a, and the motor bearings 20e and 20f support the motor rotation shaft 20b in a rotatable manner with respect to the motor case 20a. The bracket 60 acts as a heat sink to radiate heat generated by the circuit board 62 and also serves as a bearing holder that supports the motor bearing 20e. The motor case 20a houses the motor rotation shaft 20b, the stator 20c, the rotor 20d, and the motor bearing 20f and also serves as a motor bearing holder that supports the motor bearing 20f.

In the bracket 60, threaded holes 70t, 71t, 72t, and 73t for fastening the circuit board 62 to the bracket 60, using the circuit board fixing screws 70s, 71s, 72s, and 73s, respectively, are formed. The circuit board fixing screw 70s to 73s are screwed into the threaded holes 70t to 73t via attachment holes formed in the circuit board 62, respectively. Because of this configuration, the circuit board 62 is fastened to the bracket 60.

In addition, in the bracket 60, attachment holes 67h, 68h, and 69h that penetrate the bracket 60 are formed. The attachment holes 67h, 68h, and 69h are used to fasten the bracket 60 to the motor case 20a, using the bracket fixing screws 67s, 68s, and 69s, respectively.

The bracket fixing screw 68s is screwed into the threaded hole 68t formed in the motor case 20a via the attachment hole 68h. The bracket fixing screw 69s is screwed into the threaded hole 69t formed in the motor case 20a via the attachment hole 69h. The bracket fixing screw 67s is screwed into a threaded hole (not illustrated) formed in the motor case 20a via the attachment hole 67h. Because of this configuration, the bracket 60 is fastened to the motor case 20a.

FIG. 6 is now referred to. The cover 61 is formed in such a way that while the cover 61 is fixed (attached) to the bracket 60, an inner surface of a part of the cover 61 that faces a head of the bracket fixing screw 68s is close to the head of the bracket fixing screw 68s in an axial direction of the bracket fixing screw 68s. That is, the cover 61 has a shape in which the inner surface of the part that faces the head of the bracket fixing screw 68s is close to the head of the bracket fixing screw 68s in the axial direction of the bracket fixing screw 68s.

For example, the cover 61 may be formed in such a way that at the part that faces the head of the bracket fixing screw 68s, axial distance DC2 between a bearing surface of the bracket fixing screw 68s and the inner surface of the cover 61 is smaller than length DL2 of the bracket fixing screw 68s.

For example, the cover 61 may be formed in such a way that the axial distance DC2 between the inner surface of a part of the cover 61 that is closest to the head of the bracket fixing screw 68s and the bearing surface of the bracket fixing screw 68s is smaller than the length DL2 of the bracket fixing screw 68s.

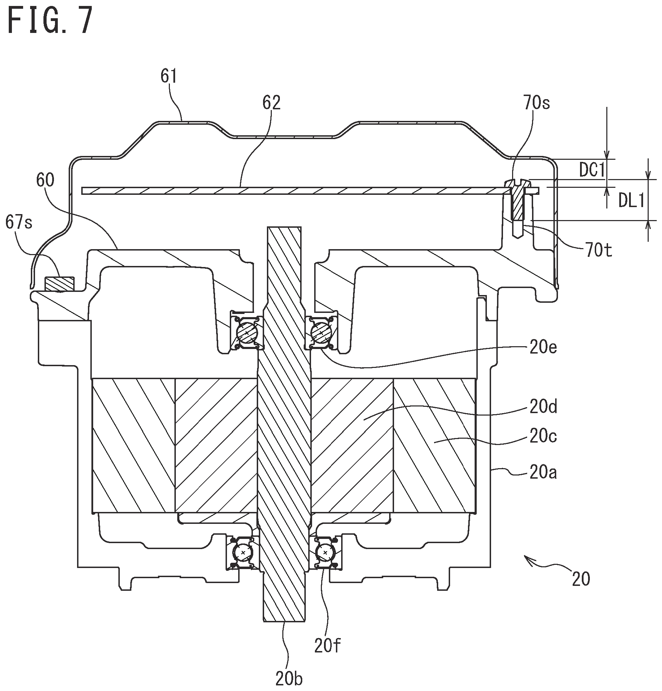

FIG. 7 is now referred to. Likewise with respect to another bracket fixing screw 67s, the cover 61 is formed in such a way that an inner surface of a part of the cover 61 that faces a head of the bracket fixing screw 67s is close to the head of the bracket fixing screw 67s in an axial direction of the bracket fixing screw 67s.

The cover 61 is formed in such a way that while the cover 61 is fixed (attached) to the bracket 60, an inner surface of a part of the cover 61 that faces a head of the circuit board fixing screw 70s is close to the head of the circuit board fixing screw 70s in an axial direction of the circuit board fixing screw 70s. That is, the cover 61 has a shape in which the inner surface of the part that faces the head of the circuit board fixing screw 70s is close to the head of the circuit board fixing screw 70s in the axial direction of the circuit board fixing screw 70s.

For example, the cover 61 may be formed in such a way that at the part that faces the head of the circuit board fixing screw 70s, axial distance DC1 between a bearing surface of the circuit board fixing screw 70s and the inner surface of the cover 61 is smaller than length DL1 of the circuit board fixing screw 70s. For example, the cover 61 may be formed in such a way that the axial distance DC1 between the inner surface of a part of the cover 61 that is closest to the head of the circuit board fixing screw 70s and the bearing surface of the circuit board fixing screw 70s is smaller than the length DL1 of the circuit board fixing screw 70s.

Likewise with respect to the other circuit board fixing screws 71s to 73s, the cover 61 is formed in such a way that an inner surface of a part of the cover 61 that faces a head of the circuit board fixing screw 71s is close to the head of the circuit board fixing screw 71s in an axial direction of the circuit board fixing screw 71s, an inner surface of a part of the cover 61 that faces a head of the circuit board fixing screw 72s is close to the head of the circuit board fixing screw 72s in an axial direction of the circuit board fixing screw 72s, and an inner surface of a part of the cover 61 that faces a head of the circuit board fixing screw 73s is close to the head of the circuit board fixing screw 73s in an axial direction of the circuit board fixing screw 73s.

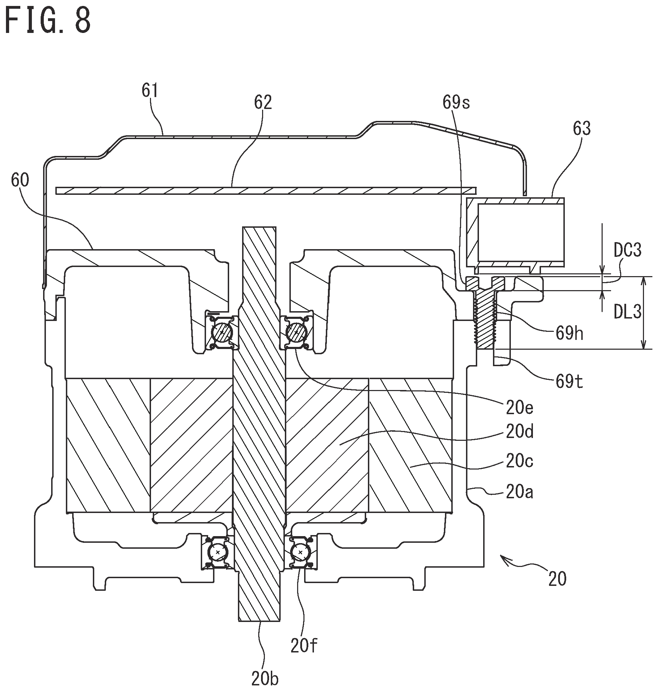

FIG. 8 is now referred to. The connector 63 is sandwiched between the cover 61 and the bracket 60 and is restricted from being displaced. The connector 63 is restricted from being displaced, for example, in the axial direction of the bracket fixing screw 69s due to being sandwiched between the cover 61 and the bracket 60. Note that in the example of the present embodiment, the axial directions of the bracket fixing screws 67s to 69s and the circuit board fixing screws 70s to 73s are aligned with the axial direction of the motor rotation shaft 20b.

The connector 63 is arranged close to a head of the bracket fixing screw 69s in the axial direction of the bracket fixing screw 69s.

For example, the connector 63 may be arranged in such a way that at a part of the connector 63 that faces the head of the heat sink fixing screw 69s, axial distance DC3 between a bearing surface of the bracket fixing screw 69s and the connector 63 is smaller than length DL3 of the bracket fixing screw 69s. For example, the connector 63 may be arranged in such a way that the axial distance DC3 between a part of the connector 63 that is closest to the head of the bracket fixing screw 69s and the bearing surface of the bracket fixing screw 69s is smaller than the length DL3 of the bracket fixing screw 69s.

### (Variations)

(1) Although, in the foregoing description, an example in which the motor control device of the present invention is applied to an electric power steering device using a column assist system, which is referred to as a so-called upstream assist system, was described, the motor control device of the present invention may be applied to an electric power steering device using a so-called downstream assist system. Hereinafter, as an example of the electric power steering device using the downstream assist system, configuration examples in which the motor control device of the present invention is applied to electric power steering devices using a single pinion assist system, a rack assist system, and a dual pinion assist system will be described.

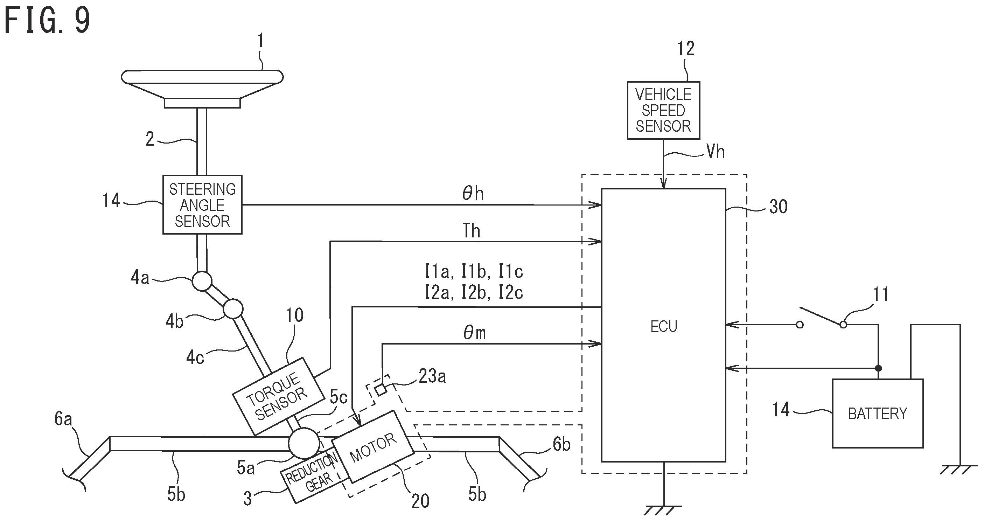

FIG. 9 illustrates a configuration example in which the motor control device of the present invention is applied to an electric power steering device using the single pinion assist system. A steering wheel 1 is connected to a universal joint 4a at one end of an intermediate shaft via a steering shaft 2. In addition, to a universal joint 4b at the other end, an input-side shaft 4c of a torsion bar (not illustrated) is coupled.

A pinion rack mechanism 5 includes a pinion gear (pinion) 5a, a rack bar (rack) 5b, and a pinion shaft 5c. The input-side shaft 4c and the pinion rack mechanism 5 are connected by the torsion bar (not illustrated) that is twisted due to a difference in rotation angles between the input-side shaft 4c and the pinion rack mechanism 5. A torque sensor 10 electromagnetically measures a torsion angle of the torsion bar as steering torque Th of the steering wheel 1.

To the pinion shaft 5c, a motor 20 assisting steering force of the steering wheel 1 is connected via a reduction gear 3, and the rotation angle sensor 23a calculates rotation angle information of a motor rotation shaft of the motor 20.

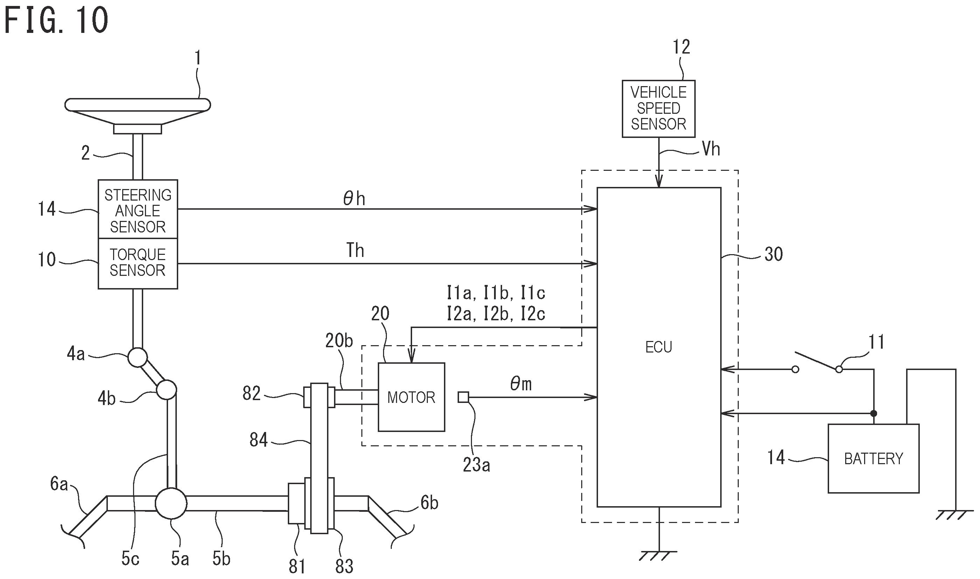

(2) FIG. 10 illustrates a configuration example in which the motor control device of the present invention is applied to an electric power steering device using the rack assist system. A spiral groove (not illustrated) is formed on an outer circumferential surface of a rack bar 5b, and a spiral groove (not illustrated) of the same lead as the spiral groove of the rack bar 5b is also formed on an inner circumferential surface of a nut 81. By a plurality of rolling elements being arranged in a rolling path formed by the spiral grooves, a ball screw is formed.

A belt 84 is wound around a driving pulley 82 coupled to a motor rotation shaft 20b of a motor 20 assisting steering force of a steering wheel 1 and a driven pulley 83 coupled to the nut 81, and rotational motion of the motor rotation shaft 20b is converted to linear motion of the rack bar 5b. A rotation angle sensor 23a calculates rotation angle information of the motor rotation shaft of the motor 20.

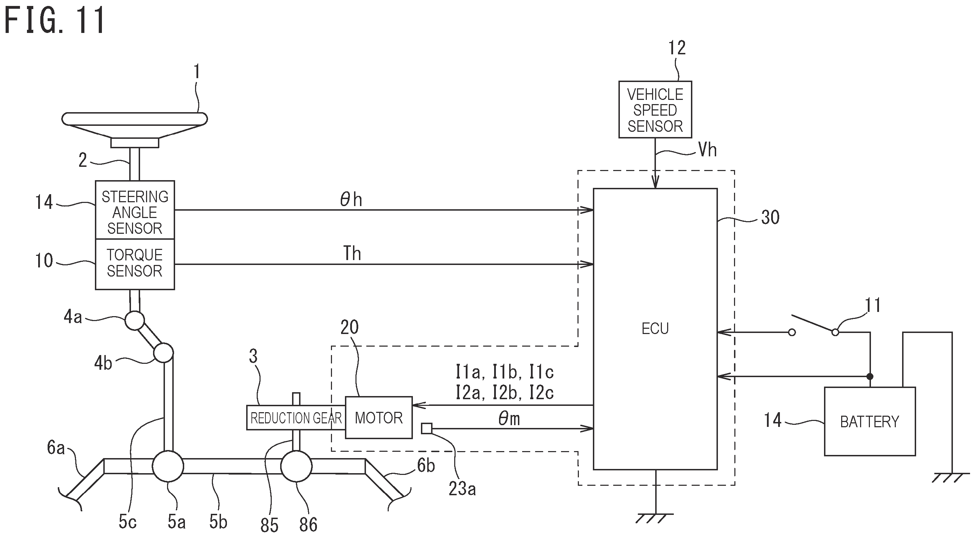

(3) FIG. 11 illustrates a configuration example in which the motor control device of the present invention is applied to an electric power steering device using the dual pinion assist system. The electric power steering device using the dual pinion assist system includes, in addition to a pinion shaft 5c and a pinion gear 5a, a second pinion shaft 85 and a second pinion gear 86, and a rack bar 5b includes first rack teeth (not illustrated) that mesh with the pinion gear 5a and second rack teeth (not illustrated) that mesh with the second pinion gear 86.

To the second pinion shaft 85, a motor 20 assisting steering force of the steering wheel 1 is connected via a reduction gear 3, and a rotation angle sensor 23a calculates rotation angle information of a motor rotation shaft of the motor 20.

### (Advantageous Effects of Embodiment)

(1) A motor control device includes: a motor case 20a configured to house a stator 20c and a rotor 20d of a motor 20; a bracket 60 fastened to the motor case 20a, using bracket fixing screws 67s and 68s; a cover 61 fixed to the bracket 60; and a circuit board 62 for motor control fastened to the bracket 60, using circuit board fixing screws 70s to 73s and housed in a space enclosed by the bracket 60 and the cover 61. The cover 61 is formed in such a way that parts of the cover 61 facing heads of the bracket fixing screws 67s and 68s are close to heads of the bracket fixing screws 67s and 68s in axial directions of the bracket fixing screws 67s and 68s, respectively and parts of the cover 61 facing heads of the circuit board fixing screws 70s to 73s are close to heads of the circuit board fixing screws 70s to 73s in axial directions of the circuit board fixing screws 70s to 73s, respectively.

Because of this configuration, even when screwing of not only the circuit board fixing screws 70s to 73s but also the bracket fixing screws 67s and 68s is loosened, it is possible to prevent the screws from falling off from attachment positions by the cover 61.

(2) The cover 61 may be formed in such a way that distances between parts of the cover 61 facing heads of the bracket fixing screws 67s and 68s and bearing surfaces of the bracket fixing screws 67s and 68s are smaller than lengths of the bracket fixing screws 67s and 68s, respectively and distances between parts of the cover 61 facing heads of the circuit board fixing screws 70s to 73s and bearing surfaces of the circuit board fixing screws 70s to 73s are smaller than lengths of the circuit board fixing screw 70s to 73s, respectively.

Because of this configuration, even when screwing of not only the circuit board fixing screws 70s to 73s but also the bracket fixing screws 67s and 68s is loosened, it is possible to prevent the screws from falling off from attachment positions by the cover 61.

(3) The bracket 60 may be fastened to the motor case 20a, using the bracket fixing screws 67s and 68s and a bracket fixing screw 69s, and the circuit board 62 may include a connector 63 for connecting the circuit board 62 to a harness or a cable. The connector 63 may be arranged close to a head of the bracket fixing screw 69s in an axial direction of the bracket fixing screw 69s.

Because of this configuration, even when screwing of the bracket fixing screw 69s is loosened, it is possible to prevent the screws from falling off from the attachment positions by the connector 63.

(4) The connector 63 may be sandwiched between the cover 61 and the bracket 60, and may be restricted from being displaced.

Since because of this configuration, it is possible to prevent the connector 63 from being displaced in the axial direction of the bracket fixing screw 69s, the bracket fixing screw 69s can be more securely prevented from falling off by the connector 63. In addition, the circuit board 62 can be prevented from bending due to external force applied to the harness or the cable.

### Reference Signs List

- 1: Steering wheel
- 2: Steering shaft
- 3: Reduction gear
- 4a, 4b: Universal joint
- 4c: Input-side shaft
- 5: Pinion rack mechanism
- 5a: Pinion gear (pinion)
- 5b: Rack bar (rack)
- 5c: Pinion shaft
- 6a, 6b: Tie rod
- 7a, 7b: Hub unit
- 8L,: 8R Steered wheel
- 10: Torque sensor
- 11: Ignition switch
- 12: Vehicle speed sensor
- 13: Battery
- 14: Steering angle sensor
- 20: Motor
- 20a: Motor case
- 20b: Motor rotation shaft
- 20c: Stator
- 20d: Rotor
- 20e, 20f: Motor bearing
- 23: Motor rotation angle detection circuit
- 23a: Rotation angle sensor
- 30: Electronic control unit (ECU)
- 31a, 31b: Control calculation device
- 33A: First motor current cut-off circuit
- 33B: Second motor current cut-off circuit
- 39A1, 39A2, 39B1, 39B2, 39C1, 39C2: Current detection circuit
- 41A: First gate drive circuit
- 41B: Second gate drive circuit
- 42A: First power conversion circuit
- 42B: Second power conversion circuit
- 44A: First power source cut-off circuit
- 44B: Second power source cut-off circuit
- 50: Current command value calculation unit
- 52, 53: Subtracter
- 54: Current limiting unit
- 55: Proportional-integral (PI) control unit
- 56: Two-phase/three-phase conversion unit
- 57: Three-phase/two-phase conversion unit
- 58: Angular velocity conversion unit
- 60: Bracket
- 61: Cover
- 62: Circuit board
- 63: Connector
- 64b,: 65b, 66b Boss
- 64h, 65h, 66h, 67h, 68h, 69h: Attachment hole
- 64s, 65s, 66s: Cover fixing screw
- 64t, 65t, 66t, 68t, 69t, 70t, 71t, 72t, 73t: Threaded hole
- 67s, 68s, 69s: Bracket fixing screw
- 70s, 71s, 72s, 73s: Circuit board fixing screw
- 74s, 75s: Connector fixing screw
- 81: Nut
- 82: Driving pulley
- 83: Driven pulley
- 84: Belt
- 85: Second pinion shaft
- 86: Second pinion gear
- Ca1, Ca2: Ceramic capacitor
- CA1, CA2, CB1, CB2: Electrolytic capacitor
- CNT: Connector
- Q1, Q3, Q5: High side FET
- Q2, Q4, Q6: Low side FET
- QA1, QA2, QA3, QB1, QB2, QB3: Phase cut-off FET
- Qc1, QC2, QD1, QD2: Power source cut-off FET
- La: Choke coil
- Lpa: Positive electrode-side power source line
- PWa: Power wiring
- SWAa, SWAb, SWAc, SWBa, SWBb, SWBc: Switching arm

## Claims

1. A motor control device comprising:
a motor case configured to house a stator and a rotor of a motor;
a bracket fastened to the motor case, using a first bracket fixing screw;
a cover fixed to the bracket; and
a circuit board for motor control fastened to the bracket, using a circuit board fixing screw and housed in a space enclosed by the bracket and the cover,
wherein the cover is formed in such a way that a part of the cover facing a head of the first bracket fixing screw is close to a head of the first bracket fixing screw in an axial direction of the first bracket fixing screw and a part of the cover facing a head of the circuit board fixing screw is close to a head of the circuit board fixing screw in an axial direction of the circuit board fixing screw.

2. The motor control device according to claim 1, wherein the cover is formed in such a way that distance between a part of the cover facing a head of the first bracket fixing screw and a bearing surface of the first bracket fixing screw is smaller than length of the first bracket fixing screw and distance between a part of the cover facing a head of the circuit board fixing screw and a bearing surface of the circuit board fixing screw is smaller than length of the circuit board fixing screw.

3. The motor control device according to claim 1, wherein
the bracket is fastened to the motor case, using the first bracket fixing screw and a second bracket fixing screw,
the circuit board includes a connector for connecting the circuit board to a harness or a cable, and
the connector is arranged close to a head of the second bracket fixing screw in an axial direction of the second bracket fixing screw.

4. The motor control device according to claim 3, wherein the connector is sandwiched between the cover and the bracket and is restricted from being displaced.

5. An electric power steering device comprising:
the motor control device according to any one of claims 1 to 4; and
a motor controlled by the motor control device,
wherein the electric power steering device provides a steering system of a vehicle with steering assist force by the motor.
